# EUROPÄISCHE PATENTSCHRIFT

(11) **EP 3 776 828 B1**
(45) Veröffentlichungstag und Bekanntmachung des Hinweises auf die Patenterteilung: **08.01.2025**
(21) Anmeldenummer: 19716881.8
(22) Anmeldetag: 08.04.2019
(51) Int. Cl.: H02M 1/08, H02J 3/46, H02J 3/38, H02J 11/00

(54) **PHOTOVOLTAISCHE ENERGIEERZEUGUNGSANLAGE, VERSORGUNGSLEITUNG FÜR EINE ENERGIEERZEUGUNGSANLAGE, GEGENSTECKER UND WECHSELRICHTER**
PHOTOVOLTAIC ENERGY GENERATING SYSTEM, SUPPLY LINE FOR AN ENERGY GENERATING SYSTEM, MATING PLUG, AND POWER INVERTER
INSTALLATION DE GÉNÉRATION D'ÉNERGIE PHOTOVOLTAÏQUE, LIGNE D'ALIMENTATION POUR UNE INSTALLATION DE GÉNÉRATION D'ÉNERGIE PHOTOVOLTAÏQUE, CONNECTEUR CORRESPONDANT ET ONDULEUR

(30) Priorität: 10.04.2018 DE 102018108472
(43) Veröffentlichungstag der Anmeldung: 17.02.2021
(73) Patentinhaber: SMA Solar Technology AG, 34266 Niestetal (DE)
(72) Erfinder: BUTTERWECK, Simon, 34298 Helsa (DE); PRIOR, Oliver, 34454 Bad Arolsen (DE)
(74) Vertreter: Lahnor, Peter
(86) Internationale Anmeldenummer: PCT/EP2019/058745
(87) Internationale Veröffentlichungsnummer: WO 2019/197302

(56) Entgegenhaltungen:
- WO-A1-2013/178546
- WO-A2-2007/031357
- WO-A2-2011/023732
- DE-A1- 102008 032 317
- DE-A1- 102010 017 746
- DE-A1- 102010 038 941
- DE-A1- 102010 060 399
- DE-A1- 102011 088 233
- DE-A1- 102012 217 884
- DE-A1- 102014 009 931
- DE-A1- 102016 117 229
- ANONYMOUS: "ABB Solar-Wechselrichter", BROSCHÜRE, 31 December 2015 (2015-12-31), XP055604701, Retrieved from the Internet <URL:https://www.solarmarkt.ch/artimg/20-Wechselrichter/ABB/Hersteller/PU_DE_ABB_Solar-Wechselrichter.pdf> [retrieved on 20190711]

## Beschreibung

Die Erfindung betrifft eine photovoltaische Energieerzeugungsanlage. Weiterhin betrifft die Erfindung eine Versorgungsleitung für eine photovoltaische Energieerzeugungsanlage.

Photovoltaik ist eine der Schlüsseltechnologien bei der Energiewende, also der Abkehr von fossilen Energieträgern hin zu erneuerbaren Energieträgern. Hierbei wird Sonnenlicht in einer photovoltaischen Energieerzeugungsanlage direkt mit Hilfe von Solarmodulen eines Solargenerators in elektrische Leistung in Form einer Gleichspannung umgewandelt, die wiederum mittels eines Wechselrichters in Wechselspannung zur Einspeisung in ein Wechselspannungsnetz gewandelt wird. Das hierbei entstehende Problem der elektrischen Versorgung der Elektronik des Wechselrichters wird typischerweise dadurch gelöst, dass der Wechselrichter die Versorgungsleistung bevorzugt aus dem Wechselspannungsnetz entnimmt, beziehungsweise, wenn der Wechselrichter vom Netz getrennt ist, aus dem angeschlossenen Solargenerator. Da die Spannung des bestrahlten Solargenerators allerdings wesentlich höher als die zur Versorgung erforderliche Spannung, muss eine verlustbehaftete Reduktion der Solargeneratorspannung auf die Versorgungsspannung erfolgen. Außerdem existieren Anforderungen an Betriebszustände der Energieerzeugungsanlage, in denen neben dem Netz auch der Solargenerator vom Wechselrichter getrennt sein muss oder sogar die einzelnen Solarmodule des Solargenerators voneinander getrennt und/oder kurzgeschlossen sein müssen, damit Spannungsgrenzen innerhalb der Energieerzeugungsanlage aus Gründen der Personensicherheit nicht überschritten werden. Hier entfällt die Möglichkeit der Versorgung aus dem Solargenerator.

Die Schrift EP 2 267 860 A2 schlägt daher zur Versorgung eines Wechselrichters mit getrennter Verbindung zum Netz und zum Solargenerator den Einsatz einer zusätzlichen Energiequelle vor, die den Wechselrichter mit Leistung aus dem Netz versorgt.

Weiterhin offenbart die Schrift DE 10 2010 017 746 A1 eine photovoltaische Anlage mit einer Anzahl Teilstrings, die im normalen Betrieb in Reihenverschaltung an den Wechselrichter angeschlossen sind. Im Gefahrenfall wird die Reihenverschaltung aufgetrennt, um die in der Anlage auftretenden Spannungen unter einen kritischen Wert zu reduzieren. Hierbei kann die Anlage weiter am Netz betrieben werden, indem die Teilstrings stattdessen in Parallelschaltung mit dem Wechselrichter verbunden werden.

Es ist im Lichte des oben genannten Standes der Technik Aufgabe dieser Erfindung, eine photovoltaische Energieerzeugungsanlage aufzuzeigen, bei der der Wechselrichter auch dann mit elektrischer Leistung versorgt werden kann, wenn der Wechselrichter vom Netz getrennt ist und zum Beispiel aufgrund normativer Anforderungen enge Spannungsgrenzen durch den Solargenerator eingehalten werden müssen. Es ist weiterhin Aufgabe dieser Erfindung, eine Verbindungsleitung beziehungsweise ein Steckersystem darzustellen, mit der eine photovoltaische Energieerzeugungsanlage in die Lage versetzt wird, sich aus einem spannungsbegrenzten Solargenerator zu versorgen.

Diese Aufgabe wird gelöst durch eine photovoltaische Energieerzeugungsanlage mit den Merkmalen des Anspruchs 1 und einer Versorgungsleitung mit den Merkmalen des Anspruchs 9. Bevorzugte Ausführungsformen der Erfindung sind in den abhängigen Ansprüchen beschrieben.

Eine erfindungsgemäße photovoltaische Energieerzeugungsanlage mit einem eine Reihenschaltung von Solarmodulen aufweisenden String, der mit einem Wechselrichter über Anschlussleitungen zur Umwandlung und Einspeisung elektrischer Leistung des Strings in ein Netz elektrisch verbunden ist, ist dadurch gekennzeichnet, dass der Wechselrichter dazu eingerichtet ist, eine alternative Betriebsleistung in dem Fall, dass bei Trennung des Wechselrichters vom Netz eine normale Betriebsleistung nicht aus dem Netz oder dem gesamten String beziehbar ist, nur aus einem der Solarmodule zu beziehen. Das eine der Solarmodule, das die alternative Betriebsleistung erzeugt, ist bevorzugt an einem Ende der Reihenschaltung platziert.

In einer ersten Ausführungsform wird die alternative Betriebsleistung aus einer zwischen Solarmodulanschlüssen des einen Solarmoduls anliegenden Spannung gewonnen. In diesem Fall steht die gesamte von dem Solarmodul erzeugte Leistung als alternative Betriebsleistung zur Verfügung.

In einer zweiten Ausführungsform weist das eine der Solarmodule einen Teilmodulanschluss auf, der mit einem Zwischenpunkt zwischen Teilmodulen des einen Solarmoduls elektrisch verbunden ist, wobei die alternative Betriebsleistung aus einer zwischen dem Teilmodulanschluss und einem Solarmodulanschluss des einen Solarmoduls anliegenden Spannung gewonnen wird. Hierdurch steht nur ein Teil der durch das Solarmodul erzeugbaren elektrische Leistung als alternative Betriebsleistung zur Verfügung, durch die geringere Spannung ist diese Leistung aber als alternative Betriebsleistung einfacher nutzbar.

In einer weiteren, mit der ersten und zweiten Ausführungsform kombinierbaren Ausführung ist zwischen dem einen Solarmodul und dem Wechselrichter ein DC/DC-Wandler, insbesondere ein ausgangsspannungsgeregelter Tiefsetzsteller, zur Umwandlung der alternativen Betriebsleistung angeordnet. Der DC/DC-Wandler setzt die vom Solarmodul bereitgestellte Spannung in einen direkt von Wechselrichtern als alternative Betriebsleistung nutzbaren, geringeren Spannungswert um. Falls eine vom Wechselrichter geforderte Betriebsspannung höher als die vom Solarmodul bereitgestellte Spannung ist, kann aber auch ein Hochsetzsteller verwendet werden. Desgleichen ist natürlich auch ein Hoch-Tiefsetzsteller einsetzbar, der sowohl eine Erhöhung als auch eine Reduzierung der Solarmodulspannung erlaubt.

Der DC/DC-Wandler wird bevorzugt ebenfalls von der vom Solarmodul bereitgestellten Leistung versorgt und vorteilhafterweise nur dann betrieben, wenn die alternative Betriebsleistung zum Betrieb des Wechselrichters erforderlich ist.

Der DC/DC-Wandler kann als eigenständige Komponente der Energieerzeugungsanlage in der Nähe der Solarmodule platziert sein oder auch in den Wechselrichter integriert sein.

Gemäß der Erfindung weist der Wechselrichter einen weiteren Anschluss zur Aufnahme der alternativen Betriebsleistung gemeinsam mit einem Stringanschluss auf, über den eine der Anschlussleitungen mit dem Wechselrichter verbunden ist. Der weitere Anschluss und der Stringanschluss des Wechselrichters können in einer gemeinsamen Steckverbindung integriert sein. Zur Übertragung der alternativen Betriebsleistung ist eine Verbindungsleitung vorgesehen die gemeinsam mit der mit dem Stringanschluss verbundenen Anschlussleitungen verlegt ist. Diese Verbindungsleitung und die mit dem Stringanschluss verbundene Anschlussleitung bilden erfindungsgemäß eine gemeinsame Versorgungsleitung mit einer gemeinsamen Außenisolation, die an beiden Enden bevorzugt jeweils einen Stecker mit jeweils getrennten Steckkontakten für die Verbindungsleitung und die Anschlussleitung aufweist.

Wenn die photovoltaische Energieerzeugungsanlage dazu eingerichtet ist, bei Trennung von dem Netz und/oder oder im Gefahrenfall alle Solarmodule des Strings voneinander elektrisch zu trennen und/oder alle Solarmodule des Strings (bis auf ein Solarmodul, das die alternative Betriebsleistung bereitstellt) kurzzuschließen, kann dennoch eine alternative Betriebsleistung zur Versorgung des Wechselrichters aus dem einen - nicht kurzgeschlossenen - Solarmodul gewonnen werden. Diese alternative Betriebsleistung kann dann beispielsweise genutzt werden, um nach Beendigung des Gefahrenfalls die Energieerzeugungsanlage wieder in Betrieb zu nehmen, oder um mit der Energieerzeugungsanlage jederzeit eine Datenkommunikation zu ermöglichen.

Ein weiterer Aspekt der Erfindung betrifft eine Versorgungsleitung für eine photovoltaische Energieerzeugungsanlage mit einem Wechselrichter und einen daran angeschlossenen String aus einer Reihenschaltung von Solarmodulen. Die Versorgungsleitung weist hierbei eine Anschlussleitung zur Übertragung eines Stringstroms der photovoltaischen Energieerzeugungsanlage an einen Wechselrichter, eine Verbindungsleitung zur Übertragung einer alternativen Betriebsleistung an den Wechselrichter, und eine Außenisolation auf, die die Anschlussleitung und die Verbindungsleitung umgibt, und die eine Isolationsfestigkeit gegenüber einer Stringspannung der photovoltaischen Energieerzeugungsanlage hat. An beiden Enden der Versorgungsleitung sind jeweils männlich beziehungsweise weiblich ausgeführte Stecker angeordnet, die jeweils einen Steckkontakt für die Anschlussleitung und einen Steckkontakt für die Verbindungsleitung aufweisen, wobei die Anschlussleitung und die Verbindungsleitung bevorzugt mit einer Isolationsfestigkeit voneinander isoliert sind, die geringer als die Isolationsfestigkeit gegenüber der Stringspannung der photovoltaischen Energieerzeugungsanlage ist, und insbesondere einer Isolationsfestigkeit gegenüber einer Solarmodulspannung entspricht, und wobei die Stecker an beiden Enden der Versorgungsleitung bevorzugt steckkompatibel zu SunClix-Verbindungen sind. Derartige SunClix-Verbindungen sind z.B. von der Firma Phoenix Contact erhältlich und haben sich insbesondere innerhalb der DC-Verkabelung von Photovoltaikanlagen etabliert. Der Steckkontakt für die Anschlussleistung entspricht dem Steckkontakt eines konventionellen Steckers, während der Steckkontakt für die Verbindungsleitung in Bezug auf eine Steckachse der Steckverbindung seitlich angeordnet ist und mit einem korrespondierenden Gegensteckkontakt eines Gegensteckers beim Einstecken gemeinsam mit dem Steckkontakt der Anschlussleitung elektrisch verbunden wird. Zum Zwecke eines Berührungsschutzes können Steckkontakt und Gegensteckkontakt jeweils in Gehäuseaufsätzen aus isolierendem Material untergebracht sein. Eine Übertragung der oben beschriebenen Modifikation auf andere in der Photovoltaik übliche Verbindungssysteme ist denkbar und leicht realisierbar.

Auch ein Gegenstecker zu einem Stecker einer solchen Versorgungsleitung sei hier erwähnt, wobei jedem Steckkontakt des Steckers ein Gegensteckkontakt des Gegensteckers zugeordnet ist.

Ein solcher Gegenstecker kann anstelle eines konventionellen, steckkompatiblen Gegensteckers als Teil eines Wechselrichters zur Herstellung einer elektrischen Verbindung mit einem Solarmodul in einer photovoltaischen Energieerzeugungsanlage verwendet werden. Insbesondere kann der Gegenstecker in einer Gehäuseöffnung des Wechselrichters fest verbaut sein. Auf diese Weise kann eine Versorgung des Wechselrichters mit einer alternativen Betriebsleistung ermöglicht werden, wobei auf eine solche Versorgung aber auch verzichtet werden kann, indem ein konventioneller Stecker in den erfindungsgemäßen Gegenstecker gesteckt wird.

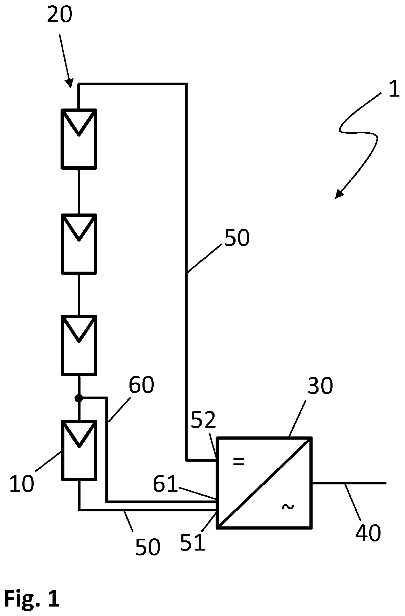

Im Folgenden wird die Erfindung näher mit Hilfe von Figuren beschrieben, von denen
- Fig. 1: eine erste Ausführungsform einer erfindungsgemäßen Energieerzeugungsanlage,
- Fig. 2: eine andere Energieerzeugungsanlage,
- Fig. 3: eine noch andere Energieerzeugungsanlage,
- Fig. 4: eine Ausgestaltung eines Solarmoduls zur Verwendung in einer erfindungsgemäßen Energieerzeugungsanlage,
- Fig. 5: eine Ausführung eines Steckers einer erfindungsgemäßen Versorgungsleitung, und
- Fig. 6: eine Ausführung eines zu dem Stecker der Fig. 5 als Gegenstecker ausgebildeten Steckers zeigen.

Eine erfindungsgemäße Energieerzeugungsanlage 1 weist einen Wechselrichter 30 auf, der über einen Netzanschluss 40 mit einem Wechselspannungsnetz verbunden werden kann. DCseitig ist der Wechselrichter 30 über Anschlussleitungen 50 mit einem als String 20 ausgebildeten Solargenerator elektrisch verbunden. Die Anschlussleitungen 50 sind mit Stringanschlüssen 51, 52 des Wechselrichters 30 verbunden. Der String 20 wird durch eine Reihenschaltung von Solarmodulen 10 gebildet. Eines der Solarmodule 10 ist mit einem ersten Solarmodulanschluss mit einer der Anschlussleitungen 50 verbunden und mit einem zweiten Solarmodulanschluss mit einer Verbindungsleitung 60, sowie mit weiteren Solarmodulen. Die Verbindungsleitung 60 ist über einen Versorgungsanschluss 61 mit dem Wechselrichter 30 verbunden, so dass der Wechselrichter 30 wahlweise sowohl eine elektrische Leistung des gesamten Strings 20 über die Stringanschlüsse 51, 52 empfangen kann als auch eine alternative Betriebsleistung, die lediglich durch das eine der Solarmodule 10 erzeugt wird, über einen der Stringanschlüsse 51 und den Versorgungsanschluss 61. Für die Bereitstellung der alternativen Betriebsleistung ist es hierbei nicht maßgeblich, ob das eine der Solarmodule 10 mit den anderen Solarmodulen des Strings 20 elektrisch verbunden ist beziehungsweise ob die anderen Solarmodule überhaupt Energie erzeugen. Bevorzugt wird die Verbindungsleitung 60 gemeinsam mit der einen der Anschlussleitungen 50 verlegt und beide bilden gemeinsam eine Versorgungsleitung mit gemeinsamer Außenisolation. Die Isolationsanforderung der Verbindungsleitung 60 gegenüber der einen Anschlussleitung 50 erfordert keine aufwändige Isolierung, da die Spannung zwischen beiden Leitungen durch die Spannung des Solarmoduls 10 bestimmt wird und damit beispielsweise zu gering zur Bildung eines Lichtbogens ist.

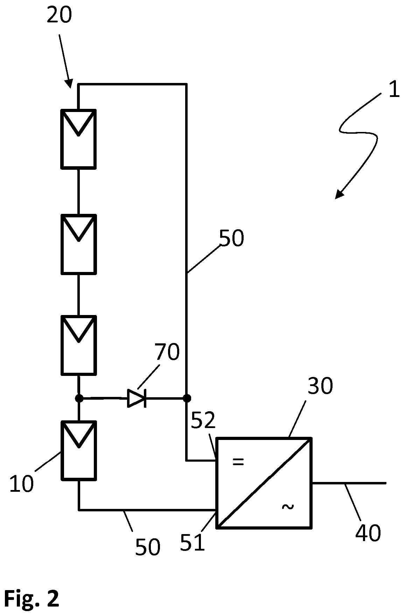

Eine weitere, nicht beanspruchte Ausführungsform einer photovoltaischen Energieerzeugungsanlage 1 wird in Fig. 2 gezeigt. Hier wird anstelle einer zusätzlichen Verbindungsleitung lediglich eine zusätzliche Verbindung zwischen dem einen der Solarmodule 10, das einseitig mit einer Anschlussleitung 50 mit den Wechselrichter 30 verbunden ist, vorgesehen, wobei die zusätzliche Verbindung über einen Diode 70 mit der anderen Anschlussleitung 50 erfolgt. Hierdurch wird erreicht, dass der Wechselrichter 30 über seine Stringanschlüsse 51, 52 zumindest eine von dem einen der Solarmodule 10 des Strings 20 erzeugte Leistung empfangen kann, selbst dann, wenn die anderen Solarmodule keine Leistung über die Versorgungsleitungen bereitstellen können, weil diese zum Beispiel kurzgeschlossen oder voneinander elektrisch getrennt sind. Andererseits verhindert die Diode 70 einen Stromfluss über diese Verbindung, wenn die an den Anschlussleitungen 50 anliegende Spannung des Strings 20 die Spannung des einen Solarmoduls 10 übersteigt.

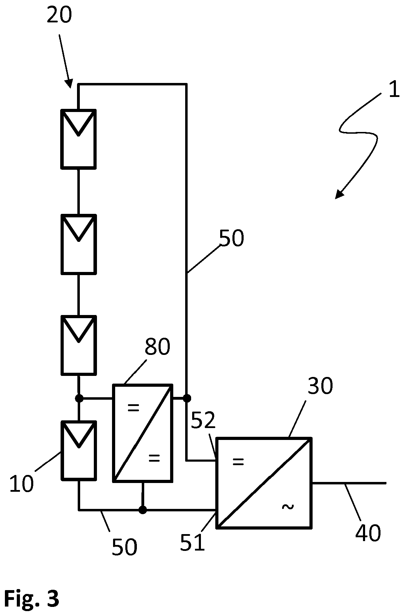

Die weitere, nicht beanspruchte Ausführungsform der Fig. 3 unterscheidet sich von der Ausführungsform der Fig. 2 dadurch, dass anstelle einer Diode 70 nunmehr ein DC/DC-Wandler 80 eingesetzt wird. Dieser kann als Hochsetzsteller oder auch als Tiefsetzsteller ausgeführt sein. Der DC/DC-Wandler 80 wird bevorzugt nur betrieben, wenn der String 20 über die Anschlussleitungen 50 keine Leistung bereitstellt. Durch den Betrieb des DC/DC-Wandlers 80 wird in diesem Fall dem Wechselrichter 30 eine alternative Betriebsleistung über die Stringanschlüsse 51, 52 zugeführt. In einer vorteilhaften Ausführung wird der DC/DC-Wandler als ausgangsspannungsgeregelter Wandler betrieben, besonders bevorzugt ist der DC/DC-Wandler 80 ein Tiefsetzsteller, der die alternative Betriebsleistung bei einer vorgegebenen Betriebsspannung, beispielsweise 5 V oder 12 V, aus der Spannung des einen Solarmoduls 10 erzeugt und bereitstellt. Die Versorgungsleistung für den Betrieb des DC/DC-Wandlers 80 wird hierbei bevorzugt ebenfalls dem einen Solarmodul 10 entnommen.

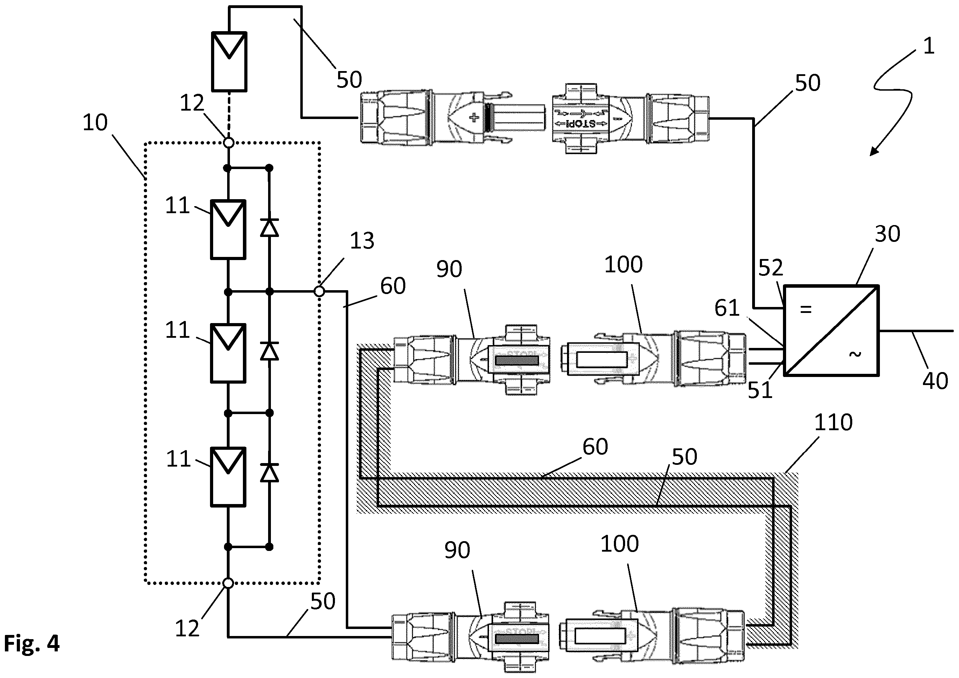

Fig. 4 zeigt schematisch, wie eine Energieerzeugungsanlage 1 mithilfe von Steckverbindern aufgebaut werden kann, sodass sie die erfinderische Lehre umsetzen kann, gleichzeitig aber weitgehend einer konventionellen Energieerzeugungsanlage entspricht. Ein Solarmodul 10 ist in 3 Teilmodule 11 mit jeweils parallel geschalteten Bypass-Dioden aufgeteilt, die zwischen zwei Solarmodulanschlüssen 12 angeordnet sind. Zusätzlich weist das Solarmodul 10 einen Versorgungsanschluss 13 auf, der mit einem Verbindungspunkt zwischen 2 Teilmodulen 11 verbunden ist. Die Solarmodulanschlüsse 12, sowie der Versorgunganschluss 13 können in einer Anschlussdose des Solarmoduls 10 untergebracht sein. Im gezeigten Fall sind weitere Solarmodule 10, die gemeinsam einen String 20 bilden, der Einfachheit halber nur durch ein Einzelmodul dargestellt.

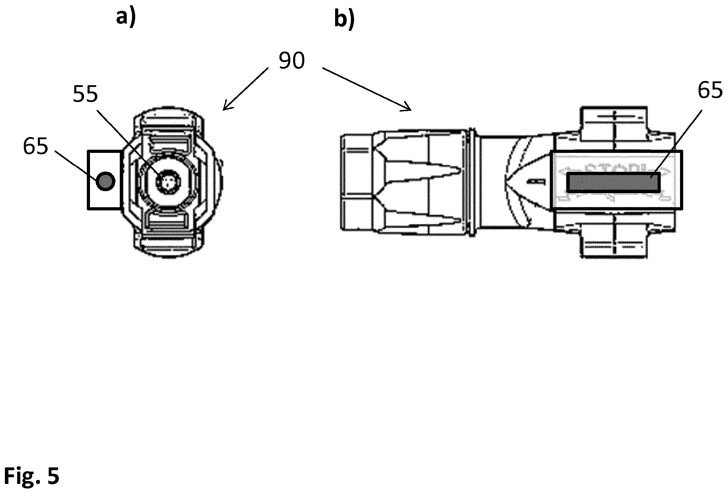

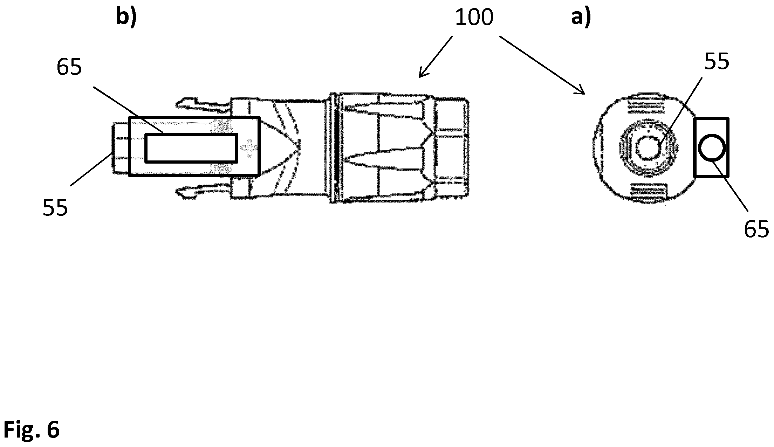

Das Solarmodul 10 ist an einem Solarmodulanschluss 12 über eine erste Anschlussleitung 50 und konventionellen SunClix-Verbindungsteckern mit einem Stringanschluss 52 des Wechselrichters 30 verbunden. Am zweiten Solarmodulanschluss 12 ist eine zweite Anschlussleitung 50 angeschlossen, die gemeinsam mit einer Verbindungsleitung 60, die an den Versorgungsanschluss 13 angeschlossen ist, zu einem modifizierten Stecker 90 geführt ist. Der modifizierte Stecker 90 wird in Verbindung mit Fig. 5 näher beschrieben und steht in Steckverbindung mit einem modifizierten Gegenstecker 100, der in Verbindung mit Fig. 6 näher beschrieben wird. Vom modifizierten Gegenstecker 100 ausgehend verlaufen die Anschlussleitung 50 und die Verbindungsleitung 60 innerhalb einer gemeinsamen Außenisolation 110 zu einem weiteren modifizierten Stecker 90, so dass diese Verbindung eine Versorgungsleitung für die Energieerzeugungsanlage 1 bildet. Der weitere modifizierte Stecker 90 wird dann über einen weiteren modifizierten Gegenstecker 100 mit einem Versorgungsanschluss 61, sowie einem Stringanschluss 51 des Wechselrichters 30 verbunden. Auf diese Weise wird die von den entsprechenden Teilmodulen 11 des Solarmoduls 10 erzeugte Leistung über die Anschlüsse 12, 13, die Leitungen 50, 60, sowie die Steckverbindung über die modifizierten Stecker 90 und die modifizierten Gegenstecker 100 an den Anschlüssen 51, 61 bereitgestellt und kann als alternative Betriebsleistung vom Wechselrichter 30 genutzt werden. Der Stringanschluss 51 und der Versorgungsanschluss 61 können als am Gehäuse des Wechselrichters 30 fest montierter Gegenstecker analog zum modifizierten Gegenstecker 100 ausgeführt sein (nicht gezeigt). In diesem Fall kann der gezeigte modifizierte Stecker 90 mit dem Wechselrichter 30 über eine Versorgungsleitung verbunden werden, bei der die Verbindungsleitung 60 und die Anschlussleitung 50 jeweils an einem Ende mit einem modifizierten Stecker 90 und am anderen Ende mit einem modifizierten Gegenstecker 100 versehen sind.

Fig. 5 zeigt nähere Details eines modifizierten Steckers 90, wobei Fig. 5a den modifizierten Stecker 90 in einer Vorderansicht und Fig. 5b den modifizierten Stecker 90 in einer Seitenansicht zeigen. Der modifizierte Stecker 90 umfasst ein Gehäuse, dessen geometrische Abmessungen den geometrischen Abmessungen eines konventionellen SunClix-Steckers entsprechen. Auch eine zentrale Kontaktstruktur 55, die mit einer Anschlussleitung 50 verbindbar ist und dazu ausgelegt ist, den gesamten Stringstrom eines Solargenerator zu übertragen, entspricht der Kontaktstruktur eines konventionellen SunClix-Steckers. Zusätzlich weist der modifizierte Stecker 90 einen seitlichen Aufsatz aus isolierendem Material mit einer weiteren Kontaktstruktur 65 auf, die mit der Verbindungsleitung 60 verbindbar ist. Die weitere Kontaktstruktur 65 kann als Kontaktstift ausgelegt sein, und der Aufsatz ist bevorzugt derart gestaltet, dass die Kontaktstruktur 65 im Inneren des Aufsatzes berührungssicher angeordnet ist.

Fig. 6 zeigt nähere Details eines modifizierten Gegensteckers 100, wobei Fig. 6a den modifizierten Gegenstecker 100 in einer Vorderansicht und Fig. 6b den modifizierten Gegenstecker 100 in einer Seitenansicht zeigen. Der modifizierte Gegenstecker 100 umfasst ein Gehäuse, dessen geometrische Abmessungen den geometrischen Abmessungen eines konventionellen SunClix-Gegensteckers entsprechen. Auch eine zentrale Kontaktstruktur 55, die mit einer Anschlussleitung 50 verbindbar ist und dazu ausgelegt ist, den gesamten Stringstrom eines Solargenerator zu übertragen, entspricht der Kontaktstruktur eines konventionellen SunClix-Gegensteckers. Zusätzlich weist der modifizierte Gegenstecker 100 einen seitlichen Aufsatz aus isolierendem Material mit einer weiteren Kontaktstruktur 65 auf, die mit der Verbindungsleitung 60 verbindbar ist. Die weitere Kontaktstruktur 65 kann als Kontakthülse ausgelegt sein, und der Aufsatz ist bevorzugt derart gestaltet, dass die Kontaktstruktur 65 im Inneren des Aufsatzes berührungssicher angeordnet ist. Weiterhin ist der Aufsatz des modifizierten Gegensteckers 100 derart ausgeführt, dass er in einen modifizierten Stecker 90 gemäß Fig. 5 eingesteckt werden kann, und dabei sowohl die Kontaktstrukturen 55 als auch die Kontaktstrukturen 65 des modifizierten Steckers 90 mit den Kontaktstrukturen 55 und den Kontaktstrukturen 65 des modifizierten Gegensteckers 100 elektrisch verbunden werden. Die Kontaktstrukturen 55, 65 werden dabei von den ineinander gesteckten Gehäusen beziehungsweise Aufsätzen des Steckers und des Gegensteckers vor Verschmutzung geschützt, zum Beispiel indem die Aufsätze ineinander gesteckt werden.

Durch die seitliche Anordnung des Aufsatzes können sowohl der modifizierten Stecker 90 als auch der modifizierte Gegenstecker 100 weiterhin in konventionelle SunClix-Stecker beziehungsweise Gegenstecker gesteckt werden. Auf diese Weise kann erreicht werden, dass eine konventionelle Energieerzeugungsanlage durch Austausch der SunClix-Stecker und ein wenig Verkabelungsaufwand in eine erfindungsgemäße Energieerzeugungsanlage umgewandelt werden kann. Hierbei können freiliegende Steckkontakte, die durch Einführen konventioneller SunClix-Stecker in erfindungsgemäße Stecker oder Gegenstecker entstehen, durch Verschlusskappen vor Verschmutzung und Korrosion geschützt werden.

### Bezugszeichenliste

- 1: Energieerzeugungsanlage
- 10: Solarmodul
- 11: Teilmodul
- 12: Solarmodulanschluss
- 13: Versorgungsanschluss
- 20: String
- 30: Wechselrichter
- 40: Netzanschluss
- 50: Anschlussleitung
- 51: Stringanschluss
- 52: Stringanschluss
- 55: Kontaktstruktur
- 60: Verbindungsleitung
- 61: Versorgunganschluss
- 65: Kontaktstruktur
- 70: Diode
- 80: DC/DC-Wandler
- 90: Stecker
- 100: Gegenstecker
- 110: Außenisolation

## Patentansprüche

1. Photovoltaische Energieerzeugungsanlage (1) mit einem eine Reihenschaltung von Solarmodulen (10) aufweisenden String (20), der mit einem Wechselrichter (30) über Anschlussleitungen (50) mit Stringanschlüssen (51, 52) des Wechselrichters (30) zur Umwandlung und Einspeisung elektrischer Leistung des Strings (20) in ein Netz elektrisch verbunden ist, **dadurch gekennzeichnet, dass** der Wechselrichter (30) dazu eingerichtet ist, eine alternative Betriebsleistung in dem Fall, dass bei Trennung des Wechselrichters (30) vom Netz eine normale Betriebsleistung weder aus dem Netz noch aus dem gesamten String (20) beziehbar ist, nur aus einem der Solarmodule (10) zu beziehen, das über eine Verbindungsleitung (60) mit einem Versorgungsanschluss (61) des Wechselrichters (30) verbunden ist.

2. Photovoltaische Energieerzeugungsanlage (1) nach Anspruch 1, wobei das eine der Solarmodul (10) an einem Ende der Reihenschaltung platziert ist.

3. Photovoltaische Energieerzeugungsanlage (1) nach einem der vorangehenden Ansprüche, wobei das eine der Solarmodule (10) einen Teilmodulanschluss (13) aufweist, der mit einem Zwischenpunkt zwischen Teilmodulen (11) des einen Solarmoduls (10) elektrisch verbunden ist, wobei die alternative Betriebsleistung aus einer zwischen dem Teilmodulanschluss (13) und einem Solarmodulanschluss (12) des einen Solarmoduls (10) anliegenden Spannung gewonnen wird.

4. Photovoltaische Energieerzeugungsanlage (1) nach Anspruch 1 oder 2, wobei die alternative Betriebsleistung aus einer zwischen Solarmodulanschlüssen (12) des einen Solarmoduls (10) anliegenden Spannung gewonnen wird.

5. Photovoltaische Energieerzeugungsanlage (1) nach einem der vorangehenden Ansprüche, wobei der Versorgungsanschluss (61) und der eine der Stringanschlüsse (51) des Wechselrichters (30) in eine gemeinsame Buchse integriert sind.

6. Photovoltaische Energieerzeugungsanlage (1) nach einem der vorangehenden Ansprüche, wobei eine Verbindungsleitung (60) zur Übertragung der alternativen Betriebsleistung vorgesehen ist, die gemeinsam mit der mit dem Stringanschluss (51) verbundenen Anschlussleitungen (50) verlegt ist.

7. Photovoltaische Energieerzeugungsanlage (1) nach Anspruch 6, wobei die Verbindungsleitung (60) und die mit dem Stringanschluss (51) verbundene Anschlussleitung (50) eine gemeinsame Versorgungsleitung mit einer gemeinsamen Außenisolation bilden, die an beiden Enden jeweils einen Stecker (90) mit jeweiligen Steckkontakten für die Verbindungsleitung (60) und die Anschlussleitung (50) aufweist.

8. Photovoltaische Energieerzeugungsanlage (1) nach einem der vorangehenden Ansprüche, wobei die Energieerzeugungsanlage (1) dazu eingerichtet ist, bei Trennung von dem Netz und/oder im Gefahrenfall alle Solarmodule (10) des Strings (20) voneinander elektrisch zu trennen und/oder alle Solarmodule bis auf ein Solarmodul (10) des Strings (20) kurzzuschließen.

9. Versorgungsleitung für eine photovoltaische Energieerzeugungsanlage (1) mit einem Wechselrichter (30) und einen daran angeschlossenen String (20) aus einer Reihenschaltung von Solarmodulen (10), aufweisend:
- eine Anschlussleitung (50) zur Übertragung eines Stringstroms der photovoltaischen Energieerzeugungsanlage (1) an den Wechselrichter (30),
- eine Verbindungsleitung (60) zur Übertragung einer alternativen Betriebsleistung an den Wechselrichter (30),
- eine Außenisolation (110), die die Anschlussleitung (50) und die Verbindungsleitung (60) umgibt, und die eine Isolationsfestigkeit gegenüber einer Stringspannung der photovoltaischen Energieerzeugungsanlage (1) aufweist, und
- jeweils einen männlich oder weiblich ausgebildeten Stecker (90) an jedem der beiden Enden der Versorgungsleitung, die jeweils einen Steckkontakt für die Anschlussleitung (50) und einen Steckkontakt für die Verbindungsleitung (60) aufweisen,
wobei die Anschlussleitung (50) und die Verbindungsleitung (60) mit einer Isolationsfestigkeit voneinander isoliert sind, die geringer als die Isolationsfestigkeit gegenüber der Stringspannung der photovoltaischen Energieerzeugungsanlage (1) ist, insbesondere einer Isolationsfestigkeit gegenüber einer Solarmodulspannung entspricht, und
wobei die Stecker an beiden Enden der Versorgungsleitung steckkompatibel zu SunClix-Verbindungen sind.

## Claims

1. A photovoltaic power generation system (1) with a string (20) comprising a series connection of solar modules (10), which is electrically connected to an inverter (30) via power lines (50) via string connections (51, 52) of the inverter (30) for converting and feeding electrical power from the string (20) into a network, **characterised in that** the inverter (30) is configured to obtain an alternative operating power from only one of the solar modules (10) in the event that normal operating power can be obtained neither from the network nor from the entire string (20), the one of the solar modules (10) being connected to a string connection (61) of the inverter (30) via a connecting line (60).

2. The photovoltaic power generation system (1) according to claim 1, wherein the one of the solar modules (10) is placed at one end of the series connection.

3. The photovoltaic power generation system (1) according to one of the preceding claims, wherein the one of the solar modules (10) has a submodule connection (13) which is electrically connected to an intermediate point between sub-modules (11) of the one solar module (10), wherein the alternative operating power is obtained from a voltage applied between the submodule connection (13) and a solar module connection (12) of the one solar module (10).

4. The photovoltaic power generation system (1) according to claim 1 or 2, wherein the alternative operating power is obtained from a voltage applied between solar module connections (12) of the one solar module (10).

5. The photovoltaic power generation system (1) according to one of the preceding claims, wherein the further connection (61) and the string connection (51) of the inverter are integrated in a common socket.

6. The photovoltaic power generation system (1) according to one of the preceding claims, wherein a connecting line (60) is provided for the transmission of the alternative operating power, which is installed together with the power lines (50) connected to the string connection (51).

7. The photovoltaic power generation system (1) according to claim 6, wherein the connecting line (60) and the power line (50) connected to the string connection (51) form a common supply line with a common external insulation, which at both ends has a connector (90) with respective plug contacts for the connecting line (60) and the power line (50).

8. The photovoltaic power generation system (1) according to one of the preceding claims, wherein the power generation system (1) is set up to electrically disconnect all solar modules (10) of the string (20) from one another and/or to short-circuit all solar modules except for one solar module (10) of the string (20) in the event of disconnection from the grid and/or in the event of danger.

9. A supply line for a photovoltaic energy generation system (1) with an inverter (30) and a string (20) connected thereto from a series connection of solar modules (10), comprising:- a power line (50) for transmitting a string current of the photovoltaic power generating system (1) to the inverter (30),
- a connecting line (60) for transmitting an alternative operating power to the inverter (30),
- an external insulation (110) which surrounds the power line (50) and the connecting line (60) and which has an insulation resistance to a string voltage of the photovoltaic power generating system (1), and
- a male or female connector (90) at each of the two ends of the supply line, which each have a plug contact for the power line (50) and a plug contact for the connecting line (60),
wherein the power line (50) and the connecting line (60) are insulated from one another with an insulation strength which is lower than the insulation strength with respect to the string voltage of the photovoltaic energy generation system (1), in particular corresponds to an insulation strength with respect to a solar module voltage, and wherein the plugs at both ends of the supply line are plug-compatible with SunClix connections.

## Revendications

1. Système de production d'énergie photovoltaïque (1) avec un string (20) comprenant une connexion en série de modules solaires (10), qui est connecté électriquement à un onduleur (30) par des lignes électriques (50) via des connexions de string (51, 52) de l'onduleur (30) pour convertir et alimenter un réseau en énergie électrique à partir du string (20), **caractérisé par le fait que** l'onduleur (30) est configuré pour obtenir une puissance de fonctionnement alternative à partir d'un seul des modules solaires (10) dans le cas où la puissance de fonctionnement normale ne peut être obtenue ni à partir du réseau ni à partir de l'ensemble de la branche (20), l'un des modules solaires (10) étant connecté à une connexion de branche (61) de l'onduleur (30) via une ligne de connexion (60).

2. Système de production d'énergie photovoltaïque (1) selon la revendication 1, dans lequel l'un des modules solaires (10) est placé à une extrémité de la connexion en série.

3. Système de production d'énergie photovoltaïque (1) selon l'une des revendications précédentes, dans lequel l'un des modules solaires (10) possède une connexion de sous-module (13) qui est électriquement connectée à un point intermédiaire entre les sous-modules (11) du module solaire (10), dans lequel la puissance de fonctionnement alternative est obtenue à partir d'une tension appliquée entre la connexion de sous-module (13) et une connexion de module solaire (12) du module solaire (10).

4. Système de production d'énergie photovoltaïque (1) selon la revendication 1 ou 2, dans lequel la puissance de fonctionnement alternative est obtenue à partir d'une tension appliquée entre les connexions de module solaire (12) du module solaire unique (10).

5. Système de production d'énergie photovoltaïque (1) selon l'une des revendications précédentes, dans lequel la connexion supplémentaire (61) et la connexion de chaîne (51) de l'onduleur sont intégrées dans une prise commune.

6. Système de production d'énergie photovoltaïque (1) selon l'une des revendications précédentes, dans lequel une ligne de connexion (60) est fournie pour la transmission de l'énergie de fonctionnement alternative, qui est installée avec les lignes de puissance (50) connectées à la connexion de chaîne (51).

7. Système de production d'énergie photovoltaïque (1) selon la revendication 6, dans lequel la ligne de connexion (60) et la ligne d'alimentation (50) connectée à la connexion de chaîne (51) forment une ligne d'alimentation commune avec une isolation externe commune, qui possède aux deux extrémités un connecteur (90) avec des contacts de prise respectifs pour la ligne de connexion (60) et la ligne d'alimentation (50).

8. Système de production d'énergie photovoltaïque (1) selon l'une des revendications précédentes, dans lequel le Système de production d'énergie (1) est configuré pour déconnecter électriquement tous les modules solaires (10) de la chaîne (20) les uns des autres et/ou pour court-circuiter tous les modules solaires à l'exception d'un module solaire (10) de la chaîne (20) en cas de déconnexion du réseau et/ou en cas de danger.

9. Ligne d'alimentation pour un système de production d'énergie photovoltaïque (1) avec un onduleur (30) et une chaîne (20) connectée à celle-ci à partir d'une connexion en série de modules solaires (10), comprenant:-
- une ligne d'alimentation (50) pour transmettre un courant de branche du système de production d'énergie photovoltaïque (1) à l'onduleur (30),
- une ligne de connexion (60) pour transmettre une puissance de fonctionnement alternative à l'onduleur (30),
- une isolation externe (110) qui entoure la ligne d'alimentation (50) et la ligne de connexion (60) et qui présente une résistance d'isolation à une tension de chaîne du système de production d'énergie photovoltaïque (1), et
- un connecteur mâle ou femelle (90) à chacune des deux extrémités de la ligne d'alimentation, qui ont chacun un contact mâle pour la ligne d'alimentation (50) et un contact femelle pour la ligne de connexion (60),
dans lequel la ligne d'alimentation (50) et la ligne de connexion (60) sont isolées l'une de l'autre avec une force d'isolation qui est inférieure à la force d'isolation par rapport à la tension de chaîne du système de production d'énergie photovoltaïque (1), en particulier correspond à une force d'isolation par rapport à une tension de module solaire, et dans lequel les connecteurs aux deux extrémités de la ligne d'alimentation sont compatibles avec les connexions SunClix.
